# EUROPÄISCHE PATENTSCHRIFT

(11) **EP 0 705 482 B1**
(45) Veröffentlichungstag und Bekanntmachung des Hinweises auf die Patenterteilung: **13.11.1996**
(21) Anmeldenummer: 94917558.2
(22) Anmeldetag: 16.06.1994
(51) Int. Cl.: H01H 47/22

(54) **SCHALTUNGSANORDNUNG ZUR ANSTEUERUNG EINES SCHÜTZES**
SWITCHING CONTACTOR DRIVING CIRCUITRY
CIRCUITS DE COMMANDE POUR UN CONTACTEUR-DISJONCTEUR

(30) Priorität: 25.06.1993 DE 4321252
(43) Veröffentlichungstag der Anmeldung: 10.04.1996
(73) Patentinhaber: SIEMENS AKTIENGESELLSCHAFT, 80333 München (DE)
(72) Erfinder: STREICH, Bernhard, D-92224 Amberg (DE)
(86) Internationale Anmeldenummer: DE9400679
(87) Internationale Veröffentlichungsnummer: WO9500966

(56) Entgegenhaltungen:
- DE-A- 3 733 091
- DE-C- 3 152 626

## Beschreibung

Die Erfindung betrifft eine Schaltungsanordnung zur Ansteuerung eines Schutzes. Schaltungsanordnung zur Ansteuerung eines Schutzes, bei der im Steuerkreis des Schutzes zu einer Steuerspannungsquelle ein steuerbares Schaltelement, ein Meßwiderstand und die Schützspule des Schützes in Reihe liegen und das Schaltelement mit einer Regelungseinrichtung derart in Wirkverbindung steht, daß das Schutz mit einem in seinem Mittelwert konstanten Anzugsstrom versorgt wird und die Regelungseinrichtung mit Umschaltmitteln zur Auswahl von unterschiedlichen Anzugsströmen, den Leistungsklassen unterschiedlicher Schütze entsprechend, verbunden ist.

Schütze sind Fernschalter mit einem elektromagnetischen Antrieb. Man unterscheidet einen Steuerkreis des Schützes mit einer Schützspule und einen zu schaltenden Lastkreis des Schutzes mit den angeschlossenen Verbrauchern. Sobald ein hinreichender Anzugsstrom durch die Schützspule fließt, zieht das Schutz an und schaltet die im Lastkreis angeschlossenen Verbraucher ein. Um das Schutz angezogen zu halten, muß ein Haltestrom durch das Schutz fließen. Nach Abschalten dieses Haltestroms fällt das Schutz ab. Die in der Schützspule gespeicherte Energie wird in einem Freilaufkreis abgebaut.

Eine gattungsgemäße Schaltungsanordnung zur Ansteuerung eines Schutzes ist der WO-A-82/02115 zu entnehmen, bei dieser liegen im Steuerkreis des Schutzes zu einer Steuerspannungsquelle ein als steuerbares Schaltelemt dienender PMP-Transistor, ein Meßwiderstand und die Schützspule in Reihe. Der als Schaltelement wirkende Transistor ist an einer Regeleinrichtung angeschlossen die einen Komparator, eine Referenzspannungserzeuger und eine Zeiterfassungseinrichtung umfaßt. Die Zeiterfassungseinrichtung ermittelt die jeweilige Einschaltdauer des Transistors, die jeweils zur Erreichung des Stromsollwerts entsprechend dem Stromistwert erforderlich ist. Ein der Zeiterfassungseinrichtung nachgeschalteter Sollwertgeber gibt ausgangsseitig die verschiedenen Stromsollwertsignale für den Anzugsstrom bzw. den Haltestrom in einer Abhängigkeit von der Länge der Einschaltdauer des Transistors ab. Mit der Zeiterfassungseinrichtung und dem Sollwertgeber können unterschiedliche Anzugsströme, den Leistungsklassen unterschiedlicher Spulen, d.h. Schütze, entsprechend, ausgewählt werden. Die Steuerung ermöglicht es jedoch nicht, daß eine der Leistungsklasse, dem Kühlvermögen und den geforderten Ausschaltzeiten des Schutzes entsprechende Ausschaltzeit vorgegeben werden kann.

Aufgabe der Erfindung ist es, eine Schaltungsanordnung der obengenannten Art anzugeben, bei der die Ausschaltzeit des Schutzes steuerbar ist.

Erfindungsgemäß wird die Aufgabe dadurch gelöst, daß an die Schützspule ein Freilaufzweig mit einer Freilaufdiode und einem Freilaufschaltelement angeschlossen ist, wobei das Freilaufschaltelement von einem Monoflop über einen Freilaufoptokoppler, der über eine Zenerdiodenstabilisierung mit dem Freilaufschaltelement in Wirkverbindung steht, angesteuert ist und die Schaltzeiten des Monoflops über einen RC-Teiler, dessen ohmscher Anteil über einen weiteren Kodierschalter wählbar ist, einstellbar sind.

Dadurch, daß die in der Spule des Schutzes gespeicherte Energie in einem Freilaufzweig gesteuert abgebaut wird, ist die Ausschaltzeit des Schutzes steuerbar. Durch diese Steuerung wird eine der Leistungsklasse, dem Kühlvermögen und den geforderten Schaltzeiten des Schutzes entsprechende Ausschaltzeit vorgegeben. Zusätzlich werden hierdurch die beim Abschalten von Schützspulen auftretenden Überspannungen unterdrückt.

Gemäß Anspruch 2 kann in Abhängigkeit der Leistungsklasse des anzusteuernden Schutzes eine Referenzspannung eingestellt werden. Der Mittelwert des Anzugsstromes wird in Abhängigkeit von der Größe dieser Referenzspannung geregelt. Eine derartige Spannungseinstellung ist mit einfachen Mitteln zuverlässig auszuführen. Darüber hinaus kann die Spannungseinstellung genau auf den angeschlossenen Schütztyp abgestimmt werden.

Nach Anspruch 3 ist das Monoflop zusätzlich von einer Spannungsauswertungseinrichtung ansteuerbar, die an die Steuerspannungsquelle angeschlossen ist. Hierdurch kann die Ausschaltzeit des Schutzes in Abhängigkeit von der Steuerspannung automatisch gesteuert werden. So kann beispielsweise die Ausschaltzeit des Schutzes entsprechend verkürzt werden, wenn von der Steuerspannungsquelle kurzen Schaltzeiten entsprechende Steuerspannungen vorgegeben werden.

Gemäß einer Weiterbildung der Schaltungsanordnung nach Anspruch 4 kann eine programmierte Schaltsequenz für die Ansteuerung des Schutzes vorgegeben werden. Als programmierbare Steuerungseinrichtung kann beispielsweise eine speicherprogrammierbare Steuerung (SPS) angeschlossen sein. Anstelle oder zusätzlich zu der speicherprogrammierbaren Steuerung für das Schutz ist eine mechanische Betätigungseinrichtung angeschlossen, um das Schutz zu schalten. Hierdurch ist eine Handbedienung möglich.

Die programmierbare Steuerungseinrichtung schaltet das Schutz ein und aus, indem das Logikelement zur Ansteuerung des Schaltelements im Steuerkreis des Schutzes mit einer Fremdspannung beaufschlagt wird.

Nach Anspruch 5 wird die der Höhe des Anzugsstromes des Schutzes proportionale Meßspannung mit einem einstellbaren Referenzwert verglichen, wobei die Höhe des Referenzwertes mittels eines Spannungsteilers eingestellt wird. Der Benutzer gibt mittels eines entsprechenden Bedienelementes an, welcher Schütztyp anzusteuern ist. Hierdurch stellt er an dem Spannungsteiler ein Teilerverhältnis ein, daß einer Referenzspannung entspricht, die mittels der Regelung zur Einstellung eines geeigneten Anzugsstromes führt. Dadurch, daß durch eine entsprechende Referenzspannung verschiedene Anzugsströme für ein Schutz vorgegeben werden können, ist die Umschaltung zur Ansteuerung von Schützen unterschiedlicher Leistungsklassen mit marktüblichen und robusten Bauteilen realisiert.

Die weitere Aufgabe wird dadurch gelost, daß das Schaltelement mit einem Pulsweitenmodulator in Wirkverbindung steht, der unter Auswertung der im Betrieb anstehenden Schützsteuerspannung die Zeitfenster zur Steuerung des EIN-Zustands des Schaltelements vorgibt.

Um zur Ansteuerung des Schaltelements ein Steuersignal zu erhalten, das bei niedriger Steuerspannung das Schaltelement entsprechend lange in den EIN-Zustand steuert, ist es von Vorteil, wenn der Pulsweitenmodulator einen Oszillator und ein daran angeschlossenes Monoflop umfaßt, an dessen Eingang ein RC-Glied geschaltet ist, das im Betrieb durch die Schützsteuerspannung beaufschlagt wird.

Für die Ansteuerung des Schaltelementes ist es von Vorteil, wenn das Monoflop über eine Logikeinheit und eine Treiberstufe mit dem Schaltelement in Verbindung steht.

Die zuverlässige Einschaltung des Schützes ist gewährleistet, wenn bei der beschriebenen Schaltungsanordnung, bei der ein Meßwiderstand und die Schützspule des Schützes in Reihe liegen und das Schaltelement mit einer Ansteuerelektronik steuerbar ist, zur Überwachung der Schützsteuerspannung eine Spannungsformstufe vorgesehen ist, an die die Ansteuerelektronik gekoppelt ist.

Gemäß einer Weiterbildung der Erfindung ist es vorteilhaft, wenn die Spannungsformstufe eine den Mittelwert der Schützsteuerspannung bildende Spannungsauswertungsstufe und eine daran anschließende Spannungsrampe mit einer Ein- und einer Ausschaltschwelle umfaßt.

Zur elektronischen Weiterverarbeitung der Schützsteuerspannung und einer anschließenden Mittelwertbildung ist es von Vorteil, wenn die Spannungsauswertungsstufe einen Spannungsteiler umfaßt, dem ein Tiefpaß nachgeschaltet ist.

Die Bildung einer Ein- und einer Ausschaltschwelle wird auf einfache Weise realisiert, wenn die Spannungsrampe zwei Spannungsteiler aufweist, denen jeweils ein Komparator nachgeschaltet ist.

Weiterhin ist es vorteilhaft, wenn die Ausgänge der Komparatoren mit einem nachgeschalteten Flipflop derart in Wirkverbindung stehen, daß dieses an die Ansteuerelektronik ein Einschaltsignal abgibt, wenn die heruntergeteilte Schützsteuerspannung die Einschaltschwelle überschreitet und ein Ausschaltsignal abgibt, wenn die heruntergeteilte Schützsteuerspannung die Ausschaltschwelle unterschreitet. Auf diese Weise wird ohne großen Aufwand erreicht, daß die Ansteuerelektronik das Schaltelement erst ansteuert, nachdem die Schützsteuerspannung die Einschaltschwelle überschreitet und dieser Zustand solange beibehalten wird, bis die Schützsteuerspannung die Ausschaltschwelle unterschreitet.

Die Erfindung wird anhand einer in der Zeichnung dargestellten Schaltungsanordnung näher erläutert. Es zeigen:
- FIG 1: ein Blockschaltbild der gesamten Schaltungsanordnung,
- FIG 2: ein Detailschaltbild zur Regelung des Anzugsstromes,
- FIG 3: ein Detailschaltbild zur Weiterbildung der Regelung des Anzugsstromes,
- FIG 4: ein Detailschaltbild zur Regelung der Ausschaltzeit,
- FIG 5: ein Detailschaltbild einer Sollwert-Einstelleinrichtung,
- FIG 6: ein Detailschaltbild mit einem Pulsweitenmodulator zur Erzeugung eines Haltestroms und
- FIG 7: einen Steuerkreis mit einer Detaildarstellung der Spannungsformstufe.

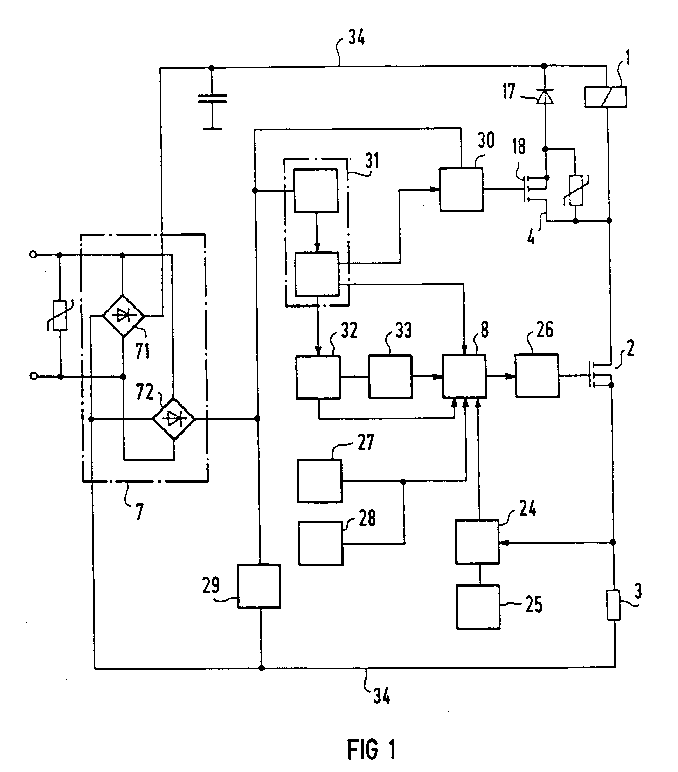

Der in FIG 1 gezeigte Steuerkreis 34 eines Schützes umfaßt einen Gleichrichterblock 7 einer Steuerspannungsquelle und dazu in Reihe geschaltet eine Schützspule 1, ein Schaltelement 2 und einen Meßwiderstand 3. An den Meßwiderstand 3 ist eine Anzugsstromregelungsschaltung 24 angeschlossen, die über ein Logikelement 8, das mittels einer Treiberstufe 26 an das Schaltelement 2 angeschlossen ist, mit dem Schaltelement 2 in Wirkverbindung steht. An den Anzugsstromregelungsschalter 24 ist ferner eine Sollwerteinstelleinrichtung 25 angeschaltet. Das Logikelement 8 ist zusätzlich mit einer programmierbaren Steuerungseinrichtung 27 sowie einer mechanischen Betätigungseinrichtung 28 verbunden. Zusätzlich wird das Logikelement 8 von einer Spannungsformstufe 31 entweder direkt oder über eine Zeitsteuerungseinrichtung 32 mit einem daran angeschlossenen Pulsweitenmodulator 33 angesteuert.

Der Gleichrichterblock 7 enthält eine erste Doppelweggleichrichtung 71, an die der Steuerkreis 34 angeschlossen ist und eine zweite Doppelweggleichrichtung 72, die einen Versorgungskreis für die Spannungsformstufe 31 und eine Freilaufsteuerung 30 speist. Ferner liegt in diesen Versorgungskreis eine Spannungsversorgungseinrichtung 29, die die Betriebsspannung für all jene Verbraucher der Schaltungsanordnung liefert, die nicht unmittelbar von dem Gleichrichterblock 7 gespeist werden.

An die Schützspule 1 ist ein Freilaufzweig 4 angeschlossen. In diesem Freilaufzweig 4 sind ein Freilaufschaltelement 18 und eine Freilaufdiode 17 in Reihe angeordnet. An dem Steuereingang des Freilaufschaltelementes 18 ist die Freilaufsteuerung 30 angeschlossen. Die Freilaufsteuerung 30 steht mit der Spannungsformstufe 31 in Signalverbindung.

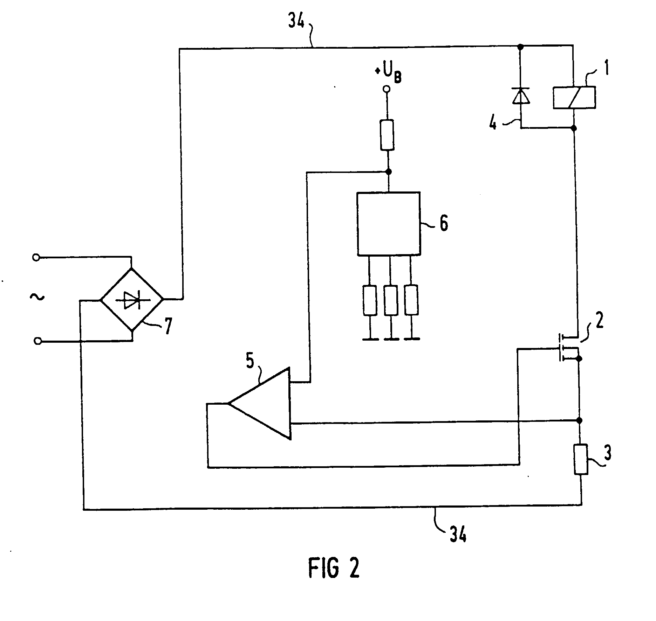

In FIG 2 ist ein Detail des Steuerkreises 34 der Schaltungsanordnung dargestellt. An den Steuereingang des Schaltelementes 2 ist der Ausgang eines Komparators 5 angeschlossen. Ein erster Eingang des Komparators 5 ist mit dem Meßwiderstand 3 verbunden. An einen zweiten Eingang des Komparators 5 ist ein Kodierschalter 6 angeschlossen.

Im Folgenden wird die Funktion der Regelung des Anzugsstromes näher erläutert. Sobald ein entsprechendes Steuersignal einer übergeordneten Regelung an den Steuerkreis 34 des Schutzes geschaltet wird, fließt im Steuerkreis 34 ein Steuerstrom. Das Schaltelement 2 ist zunächst eingeschaltet, so daß die Schützspule 1 strombeaufschlagt wird und das Schutz anzieht. Die Meßspannung an dem Meßwiderstand 3 ist proportional dem Anzugsstrom. Dessen Mittelwert wird durch Steuerung des Schaltelements 2 konstant gehalten. Hierzu wird dem ersten Eingang des Komparators 5 die an dem Meßwiderstand 3 abgegriffene Meßspannung zugeführt. Einem zweiten Eingang des Komparators 5 wird eine Referenzspannung zugeleitet. In dem Komparator 5 wird die Meßspannung mit dieser Referenzspannung verglichen. Mittels des Kodierschalters 6 kann das Teilerverhältnis eines Spannungsteilers und damit die Höhe der Referenzspannung verändert werden. Entsprechend ändert sich die Schaltschwelle des Komparators 5. Die über das Teilverhältnis auswählbaren Referenzspannungen entsprechen den jeweiligen Anzugsströmen der unterschiedlichen Leistungsklassen der Schütze, die durch die Schaltungsanordnung ansteuerbar sind. Immer dann, wenn die Meßspannung größer oder gleich der Referenzspannung ist, steht am Ausgang des Komparators 5 ein Signal an, das das Schaltelement 2 ausschaltet. Hierdurch ist der Stromfluß im Steuerkreis 34 unterbrochen. Die Meßspannung am Meßwiderstand 3 wird zu Null und damit kleiner als die Referenzspannung. In der Folge wird die Ausgangsspannung des Komparators zu Null. Das Schaltelement 2 wird wieder leitend. Hierdurch fällt wiederum eine Meßspannung am Meßwiderstand 3 ab. Demnach ergibt sich eine pulsierende Betätigung des Schaltelements 2. Die Hohe des Auszugsstromes ergibt sich aus dem Verhältnis der Einschaltzeiten zu den Ausschaltzeiten des Schaltelementes 2. Dieses Verhältnis ist wiederum abhängig von der eingestellten Referenzspannung. Die Hohe des Anzugsstromes im Steuerkreis 34 wird dabei von dem durch den Meßwiderstand 3, dem Komparator 5, dem Logikelement 8 und dem Schaltelement 2 gebildeten geschlossenen Regelkreis konstant gehalten. Der Ist-Sollwert-Vergleich wird im Komparator 5 durchgeführt. Stellglied dieses Regelkreises ist das Schaltelement 2.

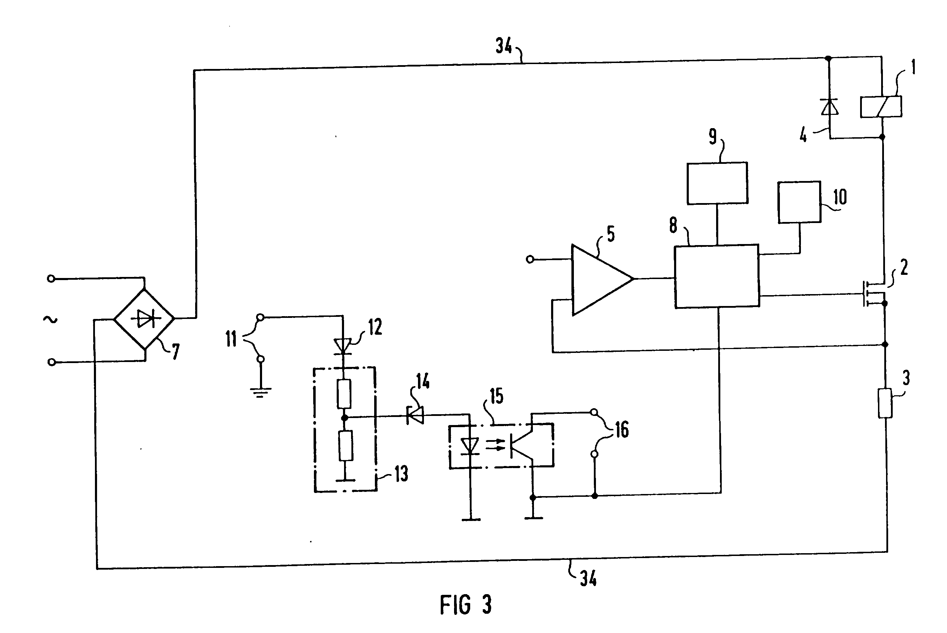

Bei der in FIG 3 gezeigten Weiterbildung der Regelung des Anzugsstromes ist zwischen den Ausgang des Komparators 5 und den Steuereingang des Schaltelements 2 zusätzlich ein Logikelement 8 geschaltet. An das Logikelement 8 sind ein Oszillator 9 und ein Zeitgeber 10 angeschlossen. Zusätzlich ist das Logikelement 8 mit Anschlüssen 16 für die mechanische Betätigungseinrichtung 28 sowie Anschlüssen 11 für die programmierbare Steuerungseinrichtung 27 versehen. Die Anschlüsse 11 sind über eine Diode 12, einen Spannungsteiler 13, eine Zenerdiode 14 und einen Optokoppler 15 mit dem Logikelement 8 verbunden.

Sobald das Schutz angezogen hat, wird über das Logikelement 8 auf einen Oszillator 9 umgeschaltet. Der Oszillator 9 liefert ein der Halteerregung des Schutzes entsprechendes Pulsmuster. Über den Zeitgeber 10 können dem Logikelement 8 Schaltzeiten vorgegeben werden. Die Ausgangssignale des Komparators 5 werden in diesem Zustand nicht berücksichtigt.

Über eine entsprechende Vorrangregelung des Logikelementes 8 kann jedoch jederzeit das Schutz über die an die Anschlüsse 16 angeschlossene mechanische Betätigungseinrichtung 28 ausgeschaltet werden. Ein Ausschaltsignal kann ebenfalls von der an die Anschlüsse 11 angeschlossenen programmierbaren Steuerungseinrichtung 27 geliefert werden. Die Ankopplung der programmierbaren Steuerungseinrichtung 27 über die Diode 12, dem Spannungsteiler 13 und die Zenerdiode 14 dient der Spannungsstabilisierung. Über den Optokoppler 15 ist eine Potentialtrennung der von einer programmierbaren Steuerung gelieferten Fremdspannung gegenüber dem Logikelement 8 gewährleistet. Mittels der angeschlossenen programmierbaren Steuerungseinrichtung 27 können ganze Schaltprogramme für das Schutz durchfahren werden.

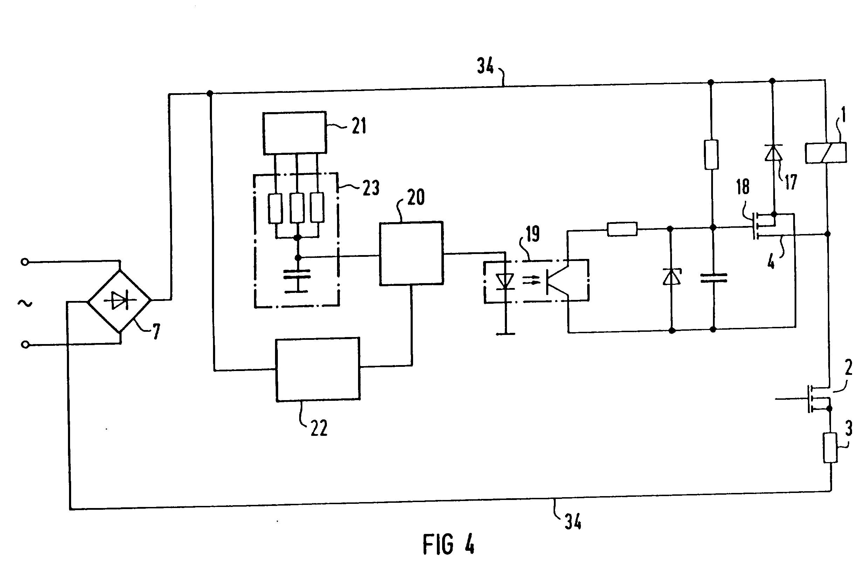

FIG 4 zeigt insbesondere eine Schaltung zur Steuerung des Freilaufzweiges 4. An das Freilaufschaltelement 18 ist über einen Freilaufoptokoppler 19 ein Monoflop 20 angeschlossen. Das Monoflop 20 steht mit einer Spannungsauswertungseinrichtung 22 und einem RC-Teiler 23, der über einen weiteren Kodierschalter 21 eingestellt wird, in Verbindung. Die Spannungsauswertungseinrichtung 22 ist an die zweite Doppelweggleichrichtung 72 angeschlossen.

Zum Ausschalten eines Schutzes muß die in der Schützspule 1 gespeicherte Energie in dem Freilaufzweig 4 abgebaut werden. Dadurch, daß in dem Freilaufzweig 4 neben der Freilaufdiode 17 das Freilaufschaltelement 18 angeordnet ist, kann dieser Energieabbau gesteuert durchgeführt werden. Die zeitliche Dauer des Energieabbaus wird durch die Einschaltzeiten des Freilaufschaltelementes 18 bestimmt. Das Freilaufschaltelement 18 wird entsprechend den vom Monoflop 20 über den Optokoppler 19 potentialfrei übermittelten Signal ein- oder ausgeschaltet. Die Triggerung des Monoflops erfolgt durch einen RC-Teiler 23. Dadurch, daß über einen weiteren Kodierschalter 21 der ohmsche Anteil des RC-Teilers 23 verändert werden kann, können am RC-Teiler 23 von einem Bediener Zeitvorgaben eingestellt werden, innerhalb welcher das Schutz definiert abfällt. Eine andere Steuerungsmöglichkeit ist durch die Spannungsauswertungseinrichtung 22 gegeben. Hierbei wird in Abhängigkeit von der von der Steuerspannungsquelle gelieferten Spannung das Monoflop 20 getriggert.

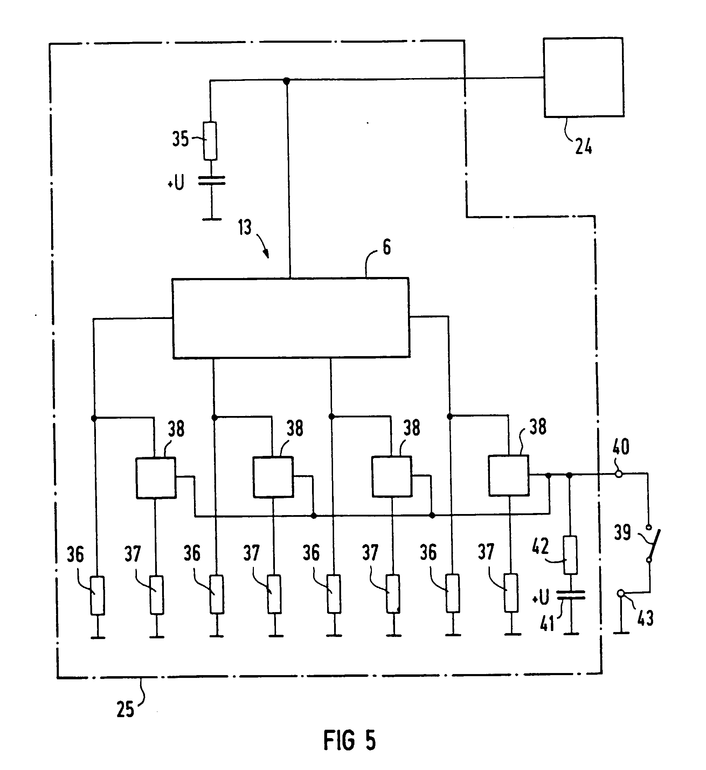

FIG 5 zeigt ein Detailschaltbild zur Sollwert-Einstelleinrichtung 25.

Die Sollwert-Einstelleinrichtung 25 umfaßt einen Spannungsteiler 13, der aus einem Primärwiderstand 35 und mehreren jeweils über einen Drehkodierschalter 6 anwählbaren Sekundärwiderständen 36 besteht. Zu jedem Sekundärwiderstand 36 ist jeweils ein Sonderwiderstand 37 mittels eines elektronischen Schalters 38 parallel schaltbar.

Die elektronischen Schalter 38 sind mit ihrem Steueranschluß jeweils über einen Begrenzungswiderstand 42 mit dem einen Pol einer Hilfsspannungsquelle 41 verbunden, deren anderer Pol an Masse liegt. An dem Verbindungspunkt der Steueranschlüsse mit dem Begrenzungswiderstand 42 ist ferner ein Taster 39 mit seinem einen Anschlußkontakt 40 gelegt. Der andere Anschlußkontakt 43 des Tasters 39 liegt an Masse.

Wenn der Benutzer dieses Schutzes dessen Schützspule 1 durch eine energiesparende Sonderspule ersetzt, ist es erforderlich, zusätzlich zu den bisher auswählbaren Referenzspannungen eine weitere Sonderspannung auswählen zu können.

Dadurch, daß die Sonderspule einen niedrigeren Anzugsstrom benötigt, muß auch die Referenzspannung am Spannungsteiler 13 entsprechend eingestellt werden. Dies geschieht durch Betätigen des Tasters 39. Hierdurch erhalten die elektronischen Schaltelemente 38 einen Steuerimpuls. Die elektronischen Schalter 38 sind so ausgelegt, daß dieser Steuerimpuls zum Schließen der Schalter 38 führt. Infolgedessen wird den Sekundärwiderständen 36 jeweils ein Sonderwiderstand 37 parallel geschaltet. Somit sind über den Drehkodierschalter 6 auch für mit einer Sonderspule bestückte Schütze unterschiedlichen Leistungsklassen entsprechende Sonderspannungen auswählbar.

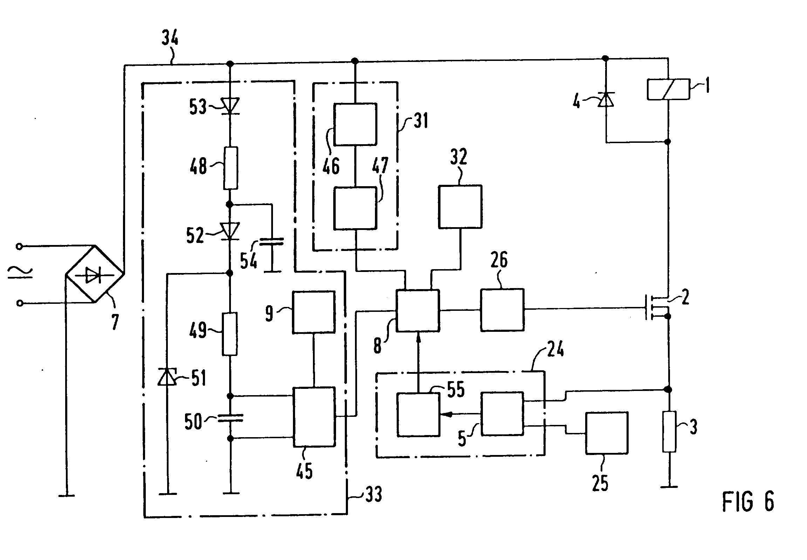

FIG 6 zeigt den Steuerkreis 34 mit einer Detaildarstellung des Pulsweitenmodulators 33 gemäß FIG 1. Zum Gleichrichterblock 7 sind die Schützspule 1, das Schaltelement 2 und der Meßwiderstand 3 in Reihe geschaltet. Parallel zur Schützspule 1 liegt der Freilaufzweig 4. Die infolge des Schützstromes am Meßwiderstand 3 anliegende Spannung ist an den Eingang der Anzugsstromregelungsschaltung 24 geschaltet, die aus dem Komparator 5 und einem nachgeschalteten Monoflop 55 besteht. Diesem schließt sich die Reihenschaltung aus dem Logikelement 8 und der Treiberstufe 26 an, die mit dem z.B. als Transistor 2 ausgeführten Schaltelement verbunden ist. An dem Komparator 5 ist eingangsseitig außerdem die Sollwert-Einstelleinrichtung 25 geschaltet, durch die eine einstellbare Referenzspannung als Schwelle vorgegeben wird. Überschreitet die Meßspannung die Referenzspannung, gibt der Komparator 5 ein Auslösesignal an das Monoflop 55, was daraufhin ein Zeitfenster konstanter Dauer, z.B. eine Millisekunde erzeugt, nach deren Ablauf das eingeschaltete Schaltelement 2 über die Logik 8 und die Treiberstufe 26 in den AUS-Zustand geschaltet wird. Das bedeutet, daß das Schütz 1 durch Öffnen und Schließen des Schaltelements 2 mit einem bestimmten Strom beaufschlagt wird. Die Höhe dieses Stromes läßt sich über das Tastverhältnis einstellen. An das Logikelement 8 ist außerdem die Zeitsteuerungseinrichtung 32 und die Spannungsformstufe 31 angeschlossen. Die Zeitsteuerungseinrichtung 32 gibt die Dauer für die Anzugsphase des Schutzes 1 vor, in der ein relativ hoher Anzugsstrom benötigt wird.

Die Spannungsformstufe 31 besteht aus einer Spannungsauswertungsstufe 46, die eine Mittelwertbildung der am Ausgang des Gleichrichterblocks 7 anstehenden Schützsteuerspannung bildet, und aus einer Spannungsrampe 47, durch die eine Einschalt- und eine Ausschaltschwelle vorgegeben ist. Die Steuerung des Schaltelements 2 über die Anzugsstromregelungsschaltung 24 erfolgt nur während der durch die Zeitsteuerungseinrichtung 32 vorgegebenen Dauer, wobei als weitere Bedingung der durch die Spannungsauswertungsstufe 46 gebildete Mittelwert für die Einschaltung zunächst die Einschaltschwelle der Spannungsrampe 47 überschreiten muß und dann solange anhält bis deren Ausschaltschwelle unterschritten wird. Die Verknüpfung dieser Bedingungen erfolgt über das Logikelement 8. An die Anzugsphase schließt sich die Haltephase des Schützes an, in der der Haltestrom um den Faktor von etwa 20 bis 30 kleiner ist als der Anzugsstrom. Der Haltestrom wird mittels des Pulsweitenmodulators 33 realisiert, der an das Logikelement 8 gekoppelt ist. Der Pulsweitenmodulator 33 besteht aus einem durch ohmsche Widerstände 48,49 gebildeten Spannungsteiler, wobei dem ohmschen Widerstand 49 noch ein Kondensator 50 zur Masse hin in Reihe geschaltet ist. Der Spannungsteiler ist über eine Schutzdiode 53 mit seinem ohmschen Widerstand 48 an die Steuerspannungsquelle angeschlossen. Zwischen den ohmschen Widerständen 48 und 49 ist eine Sperrdiode 52 geschaltet. Parallel zum Kondensator 50 liegt ein Monoflop 45, an das ein Oszillator 9 angeschlossen ist. Der Spannungsteiler liefert ein Abbild der Steuerspannung auf einem niedrigen Niveau, wobei der Kondensator 50 dementsprechend mit einer durch das RC-Glied 49,50 bestimmten Zeitkonstante aufgeladen wird. Parallel zum RC-Glied 49,50 liegt eine Zenerdiode 51, durch die das Monoflop 45 gegen Überspannungen geschützt wird. Bei jedem Taktpuls, den der Oszillator 9 abgibt, reagiert das Monoflop 45 mit einem Zeitfenster, dessen Dauer durch die momentan am Spannungsteiler anliegende Steuerspannung derart bestimmt ist, daß bei kleiner Spannungsamplitude die Aufladung des Kondensators 50 entsprechend länger dauert. Demzufolge ergibt sich am Ausgang des Monoflops 45 ein entsprechend breites Zeitfenster, was zu einer entsprechend langen Einschaltdauer des Schaltelementes 2 führt. Bei hoher Spannungsamplitude der Steuerspannung ergibt sich dagegen ein entsprechend schmales Zeitfenster am Ausgang des Monoflops 45, da in diesem Falle die Aufladung des Kondensators 50 sehr schnell erfolgt.

Die Schutzdiode 53 dient ebenso wie die Sperrdiode 52 zur Vermeidung von Rückströmen. An den Verbindungspunkt zwischen dem ohmschen Widerstand 49 und der Diode 52 ist ein Kondensator 54 gegen Masse geschaltet, der zur Glättung der anstehenden heruntergeteilten Schützsteuerspannung dient. Beim Betrieb des Steuerkreises 34 an Wechselspannung ergibt sich am Ausgang des Gleichrichterblocks 7 eine pulsierende Gleichspannung, die ohne den Einsatz des zusätzlichen Kondensators 54 in der Nähe der Nullpunkte zu undefinierten Signalen führen würde.

Wenn die pulsierende Gleichspannung unter dem Wert der Zenerdiode 51 liegt, wird für den Ladevorgang des Kondensators 50 mehr Zeit benötigt. Die Pulsbreite am Ausgang vom Monoflop 45 ändert sich in Abhängigkeit der Steuerspannung. Wird die Steuerspannung kleiner als die Zenerspannung der Zenerdiode 51, wird der Puls breiter. Bei höherer Steuerspannung wird der Puls schmäler.

Der Schalttransistor 2 wird über das Logikelement 9 und die Treiberstufe 26 mit dem so gewonnenen Signal angesteuert, so daß das Schutz weitgehend unabhängig von der Steuerspannung mit einem konstanten Haltestrom in Schützstellung "EIN" gehalten wird.

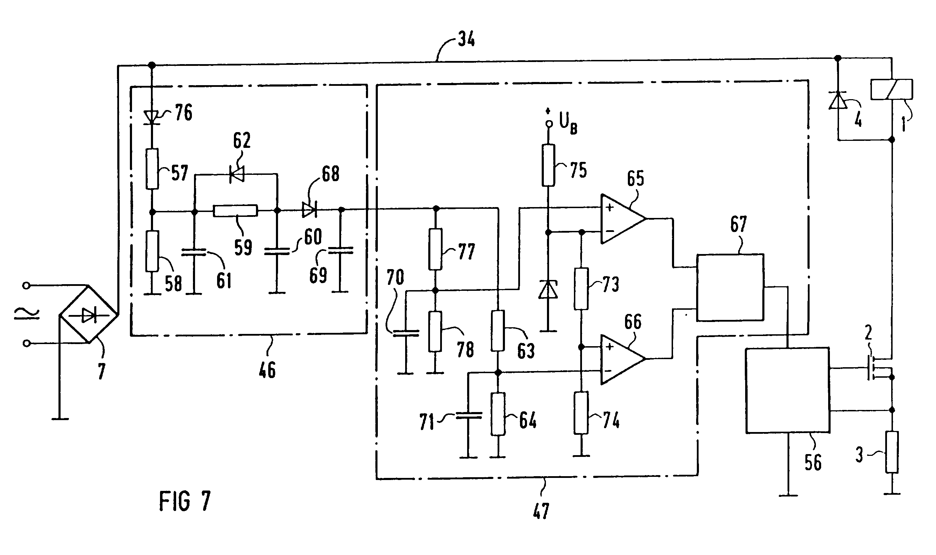

In FIG 7 ist der Steuerkreis 34 des Schutzes gemäß FIG 1 mit einer Detaildarstellung der Spannungsformstufe 31 wiedergegeben. Sie umfaßt eine Spannungsauswertungsstufe 46 und eine Spannungsrampe 47 und liegt zwischen der Steuerspannungsquelle und der Ansteuerelektronik 56, die im wesentlichen die Anzugsstromregelungsschaltung 24, die Sollwerteinstelleinrichtung 25, das Logikelement 8 und die Treiberstufe 26 beinhaltet.

Die Spannungsauswertungsstufe 46 enthält eingangsseitig eine Diode 76 und dazu in Reihe einen aus den ohmschen Widerständen 57,58 gebildeten Spannungsteiler, dem ein rückgekoppelter Tiefpaß, bestehend aus einem ohmschen Widerstand 59, zwei Kondensatoren 60,61 und einer Diode 62, nachgeschaltet ist. Der Widerstand 59 liegt einerseits am Verbindungspunkt der Widerstände 57,58 und ist andererseits über den Kondensator 60 an Masse gelegt. Dem Widerstand 58 ist der Kondensator 61 und dem Widerstand 59 die Diode 62 parallel geschaltet. In Reihe zum Widerstand 59 liegt eine Diode 68, die kathodenseitig über einen Kondensator 69 an Masse geschaltet ist.

Die solchermaßen aufgebaute Spannungsauswertungsstufe 46 ist über den Verbindungspunkt zwischen der Diode 68 und dem Kondensator 69 an die Spannungsrampe 47 gekoppelt. Diese ist im wesentlichen aus zwei Schwellwertstufen gebildet, von denen die eine zur Schaffung der Eingangsschwelle und die andere zur Bereitstellung der Ausgangsschwelle dient. Beide Schwellwertstufen sind eingangsseitig jeweils mit einem angepaßten Spannungsteiler versehen. Für die Ausschaltschwelle ist der aus den ohmschen Widerständen 77,78 gebildete Spannungsteiler vorgesehen, an deren gemeinsamen Verbindungspunkt einerseits der Kondensator 70 gegen Masse liegt und andrerseits der Komparator 65 angeschlossen ist. Der weitere eingangsseitige Anschlußpunkt des Komparators 65 ist über eine an konstanter Spannung U_{B} liegende Teilerschaltung 73,74,75 an ein festes Spannungspotential als Referenz gelegt. Parallel zum Widerstand 78 liegt der Kondensator 70 gegen Masse.

In entsprechender Weise ist die andere Schwellwertstufe aufgebaut. Sie beinhaltet einen aus den ohmschen Widerständen 63,64 gebildeten Spannungsteiler, wobei dem Widerstand 64 ein Kondensator 71 gegen Masse parallel geschaltet ist. An den gemeinsamen Verbindungspunkt der Widerstände 63,64 ist ein Komparator 66 geschaltet. An dessen anderem Eingang liegt ein durch die genannte Teilerschaltung 73,74,75 definiertes Spannungspotential an.

Beide Komparatoren 65,66 sind über ein Flipflop 67 mit der Ansteuerelektronik 56 verbunden.

Im folgenden wird die Funktionsweise der Spannungsformstufe 31 erläutert.

Die Schützsteuerspannung wird durch den Spannungsteiler 57,58 auf ein niedriges Niveau heruntergeteilt. In dem anschließenden Tiefpaß 59,60,61,62 erfolgt eine Mittelwertbildung in der Weise, daß die heruntergeteilte Schützsteuerspannung aufsummiert, und in dem anschließenden Kondensator 69 gespeichert wird. Die Diode 62 dient dabei zur Rückkopplung, während die weitere Diode 68 als Spitzenwertdetektor fungiert.

Der so gebildete Spannungsmittelwert wird in der Einschaltschwellstufe auf ein hierfür angepaßtes Niveau durch den Spannungsteiler 70,77,78 heruntergeteilt und dem Eingang des Komparators 65 zugeführt. Die Einschaltschwelle wird durch die am anderen Eingang anliegende Referenzspannung vorgegeben. Überschreitet das Abbild der Schützsteuerspannung diese Referenzspannung, führt dies zum Signalwechsel am Ausgang des Komparators 65 und daraufhin auch am Ausgang des nachgeschalteten Flipflops 67.

In entsprechender Weise wirkt die oben beschriebene Ausschaltschwellstufe, wobei nur dann ein Signalwechsel am Ausgang des Komparators 66 erfolgt, wenn die heruntergeteilte Schützsteuerspannung am Eingang des Komparators 66 seinen Referenzpegel unterschreitet. Auch dieser Signalwechsel bewirkt eine Änderung des Ausgangssignals am Flipflop 67 und zwar in der Weise, das eine Ansteuerung des Schaltelementes 2 nur erfolgt, nachdem die Schützsteuerspannung die Einschaltschwelle überschritten hat und solange aufrechterhalten wird, bis die Ausschaltschwelle unterschritten wird.

Die erfindungsgemäße Schaltungsanordnung ermöglicht die Allstrom-Ansteuerung von Schützen, d.h. den Betrieb des Schutzes unabhängig von der Form und Höhe der bereitstehenden Eingangsspannung für die Schaltung.

Die Schaltungsanordnung ist auch in sofern vorteilhaft, als Schützspulen unterschiedlicher Bauform eingesetzt werden können. Statt der üblicherweise bei Schützen eingesetzten Wechselstromspulen können auch Gleichstromspulen verwendet werden, die vorteilhafterweise Energieeinsparungen sowohl beim Anzug als auch in der Halteerregung mit sich bringen. Die Gleichstromspulen lassen sich sehr viel dichter wickeln, d.h. auch eine Vollwicklung ist möglich, was aufgrund des höheren Kupferanteils geringere Verluste während des Betriebs mit sich bringt. Der höhere Kupferanteil ermöglicht zudem die Verwendung kleinerer Steuertransformatoren. Dies bedeutet, daß an der erfindungsgemäßen Schaltungsanordnung mit der Flexibilität zum Einsatz unterschiedlicher Schützspulen, großer Bedarf besteht.

Durch diverse Einstellmöglichkeiten kann ein Betreiber mittels der erfindungsgemäßen Schaltungsanordnung seinem speziellen Anwendungsfall entsprechende Vorgaben, wie beispielsweise Schaltzyklen und/oder die Amplitude des Anzugsstromes, komfortabel machen. Diese Einstellmöglichkeiten lassen es zu, mit nur einem Ansteuerbaustein jeweils Schütze verschiedener Leistungsklassen anzusteuern. Ein solcher Ansteuerbaustein kann, insbesondere auf einer Hutschiene, nachträglich vor ein bereits installiertes Schutz montiert werden. Das Schutz kann auch bereits herstellerseitig mit dem Baustein versehen sein. Die Verwendung nur eines Ansteuerbausteins für Schütze verschiedener Leistungsklassen bietet sowohl für den Hersteller eines solchen Bausteins Vorteile als auch für den Benutzer. Der Hersteller erzielt Ersparnisse bei der Produktion. Für den Benutzer ergeben sich eine höhere Bedienungsfreundlichkeit sowie eine einfachere Wartung dadurch, daß er nur noch einen Typ Ansteuerbaustein bereitstellen muß.

## Patentansprüche

1. Schaltungsanordnung zur Ansteuerung eines Schutzes, bei der im Steuerkreis (34) des Schutzes zu einer Steuerspannungsquelle ein steuerbares Schaltelement (2), ein Meßwiderstand (3) und die Schützspule (1) des Schutzes in Reihe liegen und das Schaltelement (2) mit einer Regelungseinrichtung derart in Wirkverbindung steht, daß das Schutz mit einem in seinem Mittelwert konstanten Anzugsstrom versorgt wird und die Regelungseinrichtung mit Umschaltmitteln zur Auswahl von unterschiedlichen Anzugs strömen, den Leistungsklassen unterschiedlicher Schütze entsprechend, verbunden ist, **dadurch gekennzeichnet,** daß an die Schützspule (1) ein Freilaufzweig (4) mit einer Freilaufdiode (17) und einem Freilaufschaltelement (18) angeschlossen ist, wobei das Freilaufschaltelement (18) von einem Monoflop (20) über einen Freilaufoptokoppler (19), der über eine Zenerdiodenstabilisierung mit dem Freilaufschaltelement (18) in Wirkverbindung steht, angesteuert ist und die Schaltzeiten des Monoflops (20) über einen RC-Teiler (23), dessen ohmscher Anteil über einen weiteren Kodierschalter (21) wählbar ist, einstellbar sind.

2. Schaltungsanordnung nach Anspruch 1, bei der die an dem Meßwiderstand (3) abfallende Meßspannung einem ersten Eingang eines Komparators (5) zugeführt und an einen zweiten Eingang des Komparators (5) eine den Anzugsstrom des Schützes kennzeichnende und einstellbare Referenzspannung anschaltbar ist und das Schaltelement (2) durch ein Ausgangssignal des Komparators (5) gesteuert ist.

3. Schaltungsanordnung nach Anspruch 1 oder 2, bei der das Monoflop (20) zusätzlich von einer Spannungsauswertungseinrichtung (22) ansteuerbar ist, die an die Steuerspannungsquelle angeschlossen ist.

4. Schaltungsanordnung nach einem der Ansprüche 2 oder 3, bei der zusätzlich zwischen dem Ausgang des Komparators (5) und dem Schaltelement (2) ein Logikelement (8) geschaltet ist und an dieses Logikelement (8) zusätzlich eine programmierbare Steuerungseinrichtung (27) und/oder eine mechanische Betätigungseinrichtung (28) angeschlossen ist.

5. Schaltungsanordnung nach einem der Ansprüche 2 bis 4, bei der an den zweiten Eingang des Komparators (5) ein Spannungsteiler (13) angeschlossen ist, dessen Teilerverhältnis über einen Kodierschalter (6) einstellbar ist.

6. Schaltungsanordnung nach einem der vorangehenden Ansprüche, **dadurch gekennzeichnet,** daß das Schaltelement (2) mit einem Pulsweitenmodulator (33) in Wirkverbindung steht, der unter Auswertung der im Betrieb anstehenden Schützsteuerspannung die Zeitfenster zur Steuerung des EIN-Zustandes des Schaltelements (2) vorgibt.

7. Schaltungsanordnung nach Anspruch 6, **dadurch gekennzeichnet,** daß der Pulsweitenmodulator (33) einen Oszillator (9) und ein daran angeschlossenes Monoflop (45) umfaßt, an dessen Eingang ein RC-Glied (49,50) geschaltet ist, das im Betrieb durch die Schützsteuerspannung beaufschlagt wird.

8. Schaltungsanordnung nach Anspruch 6 oder 7, **dadurch gekennzeichnet,** daß das Monoflop (45) über ein Logikelement (8) und eine Treiberstufe (26) mit dem Schaltelement (2) in Verbindung steht.

9. Schaltungsanordnung nach einem der vorangehenden Ansprüche, **dadurch gekennzeichnet,** daß das Schaltelement (2) mit einer Ansteuerelektronik (24,25,8,26, 56) steuerbar ist und zur Überwachung der Schützsteuerspannung eine Spannungsformstufe (31) vorgesehen ist, an die die Ansteuerelektronik (24,25,8,26,56) gekoppelt ist.

10. Schaltungsanordnung nach Anspruch 9, **dadurch gekennzeichnet,** daß die Spannungsformstufe (31) eine den Mittelwert der Schützsteuerspannung bildende Spannungsauswertungsstufe (46) und eine daran anschließende Spannungsrampe (47) mit einer Ein- und einer Ausschaltschwelle umfaßt.

11. Schaltungsanordnung nach Anspruch 10, **dadurch gekennzeichnet,** daß die Spannungsauswertungsstufe (46) einen Spannungsteiler (57,58) umfaßt, dem ein Tiefpaß (59,60,61,62) nachgeschaltet ist.

12. Schaltungsanordnung nach einem der Ansprüche 9 bis 11, **dadurch gekennzeichnet,** daß die Spannungsrampe (47) zwei Spannungsteiler (77,78;63,64) aufweist, denen jeweils ein Komparator (65 bzw. 66) nachgeschaltet ist.

13. Schaltungsanordnung nach Anspruch 12, **dadurch gekennzeichnet,** daß die Ausgänge der Komparatoren (65,66) mit einem nachgeschalteten Flipflop (67) derart in Wirkverbindung stehen, daß dieses an die Ansteuerelektronik (56) ein Einschaltsignal abgibt, wenn die heruntergeteilte Schützsteuerspannung die Einschaltschwelle überschreitet und ein Ausschaltsignal abgibt, wenn die heruntergeteilte Schützsteuerspannung die Ausschaltschwelle unterschreitet.

## Claims

1. Circuit arrangement for driving a contactor, in which, in the control circuit (34) of the contactor, a controllable switching element (2), a measuring resistor (3) and the contactor coil (1) of the contactor are in series with a control voltage source, and the switching element (2) co-operates with a regulation device in such a way that the contactor is supplied with a starting current of constant average value, and the regulation device is connected to switchover means for selecting different starting currents, corresponding to the power classes of different contactors, **characterised in that** a free-wheeling branch (4) having a free-wheeling diode (17) and a free-wheeling switching element (18) is connected to the contactor coil (1), the free-wheeling switching element (18) being driven by a monoflop (20) by way of a free-wheeling optocoupler (19) which co-operates with the free-wheeling switching element (18) by way of a zener diode stabilizer, and the switching times of the monoflop (20) being adjustable by way of an RC divider (23) whose ohmic component can be selected by way of a further coding switch (21).

2. Circuit arrangement according to claim 1, in which the measurement voltage dropping at the measuring resistor (3) is fed to a first input of a comparator (5), and an adjustable reference voltage characterising the starting current of the contactor can be connected to a second input of the comparator (5), and the switching element (2) is controlled by an output signal of the comparator (5).

3. Circuit arrangement according to claim 1 or 2, in which the monoflop (20) can also be driven by a voltage evaluation device (22) which is connected to the control voltage source.

4. Circuit arrangement according to one of claims 2 or 3, in which a logic element (8) is additionally connected between the output of the comparator (5) and the switching element (2), and a programmable control device (27) and/or a mechanical actuating device (28) is additionally connected to this logic element (8).

5. Circuit arrangement according to one of claims 2 to 4, in which a voltage divider (13), whose divider ratio can be set by way of a coding switch (6), is connected to the second input of the comparator (5).

6. Circuit arrangement according to one of the preceding claims, **characterised in that** the switching element (2) co-operates with a pulse-width modulator (33) which specifies the time windows for controlling the ON state of the switching element (2) by evaluating the contactor control voltage present during operation.

7. Circuit arrangement according to claim 6, **characterised in that** the pulse-width modulator (33) comprises an oscillator (9) and a monoflop (45) connected to it, wherein an RC element (49, 50) which has the contactor control voltage applied to it during operation is connected to the input of the monoflop (45).

8. Circuit arrangement according to claim 6 or 7, **characterised in that** the monoflop (45) co-operates with the switching element (2) by way of a logic element (8) and a driver stage (26).

9. Circuit arrangement according to one of the preceding claims, **characterised in that** the switching element (2) can be controlled with driver electronic circuitry (24, 25, 8, 26, 56), and a voltage waveform stage (31), to which the driver electronic circuitry (24, 25, 8, 26, 56) is coupled, is provided for monitoring the contactor control voltage.

10. Circuit arrangement according to claim 9, **characterised in that** the voltage waveform stage (31) comprises a voltage evaluation stage (46) which forms the average value of the contactor control voltage and, connected to the voltage evaluation stage (46), a voltage ramp (47) which has a turn-on and a turn-off threshold.

11. Circuit arrangement according to claim 10, **characterised in that** the voltage evaluation stage (46) comprises a voltage divider (57, 58) which is followed by a low-pass filter (59, 60, 61, 62).

12. Circuit arrangement according to one of claims 9 to 11, **characterised in that** the voltage ramp (47) has two voltage dividers (77, 78; 63, 64), each of which is followed by a comparator (65 and 66, respectively).

13. Circuit arrangement according to claim 12, **characterised in that** the outputs of the comparators (65, 66) co-operate with a flipflop (67) connected downstream, in such a way that the flipflop (67) delivers a turn-on signal to the driver electronic circuitry (56) if the divided contactor control voltage exceeds the turn-on threshold and delivers a turn-off signal if the divided contactor control voltage falls below the turn-off threshold.

## Revendications

1. Montage destiné à la commande d'un contacteur-disjoncteur et dans lequel un élément de commutation (2) pouvant être commandé, une résistance de mesure (3) et la bobine protectrice (1) du contacteur-disjoncteur se trouvent branchés en série dans le circuit de commande (34) du contacteur-disjoncteur pour former une source de tension de commande et dans lequel l'élément de commutation (2) est en liaison fonctionnelle avec un dispositif de régulation de telle sorte que le contacteur-disjoncteur est alimenté par un courant d'actionnement dont la valeur moyenne est constante et de telle sorte que le dispositif de régulation est relié à des moyens de commutation qui sont destinés à la sélection de différents courants d'actionnement en fonction des classes de puissance de différents contacteurs-disjoncteurs, caractérisé par le fait qu'une branche de roue libre (4) comportant une diode de roue libre (17) et un élément de commutation de roue libre (18) est raccordée à la bobine protectrice (1), l'élément de commutation de roue libre (18) étant commandé par une bascule monostable (20) par l'intermédiaire d'un coupleur opto-électronique de roue libre (19) qui est en liaison fonctionnelle avec l'élément de commutation de roue libre (18) par l'intermédiaire d'une stabilisation par diode Zener, et que les temps de commutation de la bascule monostable (20) peuvent être réglés par l'intermédiaire d'un diviseur RC (23) dont la composante ohmique peut être choisie au moyen d'un autre commutateur de codage (21).

2. Montage selon la revendication 1, dans lequel la tension de mesure chutant aux bornes de la résistance de mesure (3) est envoyée à une première entrée d'un comparateur (5), une tension de référence réglable et caractéristique du courant d'actionnement du contacteur-disjoncteur peut être appliquée à une seconde entrée du comparateur (5), et l'élément de commutation (2) est commandé par un signal de sortie du comparateur (5).

3. Montage selon la revendication 1 ou 2, dans lequel la bascule monostable (20) peut être commandée en plus par un dispositif d'exploitation de la tension (22) qui est raccordé à la source de tension de commande.

4. Montage selon l'une des revendications 2 ou 3, dans lequel un élément logique (8) est branché en plus entre la sortie du comparateur (5) et l'élément de commutation (2) et un dispositif de commande programmable (27) et/ou un dispositif d'actionnement mécanique (28) sont raccordés en plus à cet élément logique (8).

5. Montage selon l'une des revendications 2 à 4, dans lequel un diviseur de tension (13), dont le rapport de division peut être réglé par l'intermédiaire d'un commutateur de codage (6), est raccordé à la seconde entrée du comparateur (5).

6. Montage selon l'une des revendications précédentes, caractérisé par le fait que l'élément de commutation (2) est en liaison fonctionnelle avec un modulateur de largeur d'impulsion (33) qui prescrit la fenêtre temporelle destinée à la commande de l'état fermé de l'élément de commutation (2) en exploitant la tension de commande du contacteur-disjoncteur qui est présente au cours du fonctionnement.

7. Montage selon la revendication 6, caractérisé par le fait que le modulateur de largeur d'impulsion (33) comprend un oscillateur (9) et une bascule monostable (45) qui est reliée à cet oscillateur et à l'entrée de laquelle est raccordé un circuit RC (49, 50) qui reçoit en fonctionnement la tension de commande du contacteur-disjoncteur.

8. Montage selon l'une des revendications 6 ou 7, caractérisé par le fait que la bascule monostable (45) est reliée à l'élément de commutation (2) par l'intermédiaire d'un élément logique (8) et par l'intermédiaire d'un étage d'attaque (26).

9. Montage selon l'une des revendications précédentes, caractérisé par le fait que l'élément de commutation (2) peut être commandé par une électronique de commande (24, 25, 8, 26, 56) et un étage de mise en forme de la tension (31), auquel l'électronique de commande (24, 25, 8, 26, 56) est reliée, est prévu pour le contrôle de la tension de commande du contacteur-disjoncteur.

10. Montage selon la revendication 9, caractérisé par le fait que l'étage de mise en forme de la tension (31) comprend un étage d'exploitation de la tension (46) formant la valeur moyenne de la tension de commande du contacteur-disjoncteur et une rampe de tension (47) qui est raccordée à cet étage d'exploitation et qui comporte un seuil de fermeture et un seuil d'ouverture.

11. Montage selon la revendication 10, caractérisé par le fait que l'étage d'exploitation de la tension (46) comprend un diviseur de tension (57, 58) en aval duquel un filtre passe-bas (59, 60, 61, 62) est branché.

12. Montage selon l'une des revendications 9 à 11, caractérisé par le fait que la rampe de tension (47) comporte deux diviseurs de tension (77, 78 ; 63, 64) en aval desquels est branché à chaque fois un comparateur (respectivement 65, 66).

13. Montage selon la revendication 12, caractérisé par le fait que les sorties des comparateurs (65, 66) sont en liaison fonctionnelle avec une bascule bistable (67) branchée en aval de telle sorte que cette bascule bistable fournit à l'électronique de commande (56) un signal de fermeture lorsque la tension divisée de commande du contacteur-disjoncteur devient supérieure au seuil de fermeture et qu'elle fournit un signal d'ouverture lorsque la tension divisée de commande du contacteur-disjoncteur devient inférieure au seuil d'ouverture.
